(19) Europäisches Patentamt

European Patent Office

Office européen des brevets

(11) Veröffentlichungsnummer: **0 469 177 B1**

(12) **EUROPÄISCHE PATENTSCHRIFT**

(45) Veröffentlichungstag der Patentschrift: **27.07.94**

(21) Anmeldenummer: **90114983.1**

(22) Anmeldetag: **03.08.90**

(51) Int. Cl.⁵: **H02P 1/30**, H02P 7/63, H02P 5/41

(54) **Verfahren und Vorrichtung zum Wiederanlassen eines Induktionsmotors.**

(43) Veröffentlichungstag der Anmeldung:
**05.02.92 Patentblatt 92/06**

(45) Bekanntmachung des Hinweises auf die Patenterteilung:
**27.07.94 Patentblatt 94/30**

(84) Benannte Vertragsstaaten:
**AT BE CH DE DK ES FR GB IT LI LU NL SE**

(56) Entgegenhaltungen:
**EP-A- 0 177 114**

**PATENT ABSTRACTS OF JAPAN vol. 10, no. 205 (E-420)(2261) 17 Juli 1986 & JP-A-61 046197**

**PATENT ABSTRACTS OF JAPAN vol. 4, no. 36 (E-3)(518) 26 März 1980 & JP-A-55 008250**

**PATENT ABSTRACTS OF JAPAN vol. 13, no. 184 (E-751)(3532) 28 April 1989 & JP-A-01 008881**

**PATENT ABSTRACTS OF JAPAN vol. 8, no. 107 (E-245)(1544) 19 Mai 1984 & JP-A-59 021289**

**PATENT ABSTRACTS OF JAPAN vol. 11, no. 400 (E-569)(2847) 26 Dezember 1987 & JP-A-62 160093**

**PATENT ABSTRACTS OF JAPAN vol. 12, no. 65 (E-586)(2912) 27 Februar 1988 & JP-A-62 207195**

(73) Patentinhaber: **SIEMENS AKTIENGESELL-SCHAFT**
**Wittelsbacherplatz 2**
**D-80333 München(DE)**

(72) Erfinder: **Neudeck, Michael, Dipl.-Ing.**
**Paul-Gossen-Strasse 34**
**D-8520 Erlangen(DE)**

## Beschreibung

Die Erfindung bezieht sich auf ein Verfahren und eine Vorrichtung zum Wiederanlassen eines Induktionsmotors, der sich infolge eines Trägheitsmoments dreht, wobei beim Wiederanlassen eine Wechselspannungsquelle über einem Frequenzwandler an den Motor angeschlossen und die Motordrehzahl durch Steuerung der Ausgangsfrequenz und der Ausgangsspannung des Frequenzwandlers gesteuert wird.

Ausfallzeiten in der Produktion entstehen dann, wenn der Umrichter, der einen Motor antreibt, nach kurzem Netzausfall oder nach dem Ausschalten nicht mehr eingeschaltet werden kann, weil sich der Motor noch nicht im Stillstand befindet. Wenn die Umrichterfrequenz nicht mit der Motorfrequenz der Asynchronmaschine übereinstimmt, könnte sich nach dem Einschalten kein Fluß aufbauen. Im geregelten Betrieb kommt es dann zu sehr großen Stromamplituden, so daß der Umrichter mit Überstrommeldung erneut abschaltet. Besonders kritische Situationen entstehen, wenn der Umrichter beispielsweise nach kurzzeitigem Netzausfall automatisch wieder eingeschaltet wird, ohne daß die aktuelle Motordrehzahl bekannt ist.

Die Aufgabe einer Fangschaltung besteht vor allem darin, den Rotorfluß, der nach dem Abschalten des Umrichters entsprechend der Rotorzeitkonstanten nach einer e-Funktion abklingt, bei laufender Maschine wieder aufzubauen. Während des Flußaufbaus dürfen keine großen Beschleunigungs- und Bremsmomente auftreten. Der Flußaufbau ist nach definierter Zeit zu beenden und der geregelte bzw. gesteuerte Betrieb der Asynchronmaschine ist wieder aufzunehmen. Bei drehzahlgeregelten Antrieben ist der Motor nach dem "Fangen" wieder auf seine ursprüngliche Solldrehzahl zu führen. Die Fangschaltung soll auch dann Anwendung finden, wenn der Motor nicht mit einem Tacho ausgestattet ist.

Aus der DE 32 02 906 C2 ist ein Verfahren und eine Vorrichtung zum Wiederanlassen eines Induktionsmotors bekannt. Dieses bekannte Verfahren ist dadurch gekennzeichnet, daß an dem Motor eine Spannung als Suchspannung angelegt wird, die zum Antrieb des Motors nicht ausreicht. Gleichzeitig wird die Frequenz des Frequenzwandlers variiert. Während der Variation der Frequenz wird der Strom durch den freilaufenden Motor gemessen und die Frequenz der Suchspannung ermittelt, die mit der Drehzahl des freilaufenden Motors übereinstimmt. Diese so ermittelte Frequenz wird als Anfangsfrequenz festgelegt. Daraufhin wird an dem Motor eine Spannung angelegt, die nicht zum Antrieb des Motors ausreicht, wobei diese Spannung mit der Anfangsfrequenz geführt wird. Sodann wird von der Anfangsspannung aus, bei Beibehaltung der Anfangsfrequenz, die Spannung allmählich erhöht und dann die Frequenz und die Spannung auf vorgegebene Werte gesteigert, so daß der Motor normal betrieben wird. Durch dieses Verfahren wird ein hoher Motoranlaßstrom vermieden, der umso größer wird, je größer der Unterschied zwischen der Ausgangsfrequenz des Frequenzwandlers und der Motordrehzahl wird.

Aus der DE 35 43 983 A1 ist ein Verfahren zum Zuschalten eines Umrichters auf eine noch drehende, nicht erregte Drehfeldmaschine bekannt, wobei der Statorwicklung vom Umrichter fortlaufend ein Soll-Strom eingeprägt wird und wobei der Umrichter den möglichen Frequenzbereich in einem Suchlauf durchführt. Bei annähernder Übereinstimmung von Umrichterfrequenz und Läuferdrehzahl steigt die Statorspannung aufgrund des Flußaufbaus an. Dazu wird der Wert des Spannungsanstiegs der Statorspannung fortlaufend erfaßt, bis ein vorbestimmter Wert erreicht ist. Bei diesem Wert des Spannungsanstiegs der Statorspannung wird die Suchgeschwindigkeit vermindert. Das Schlupffrequenzfenster wird nun mit einer verminderten Suchgeschwindigkeit durchfahren. Dabei baut sich in der Drehfeldmaschine ein Fluß auf. Sobald dieser Fluß einen vorbestimmten Wert erreicht hat, ist der beliebige momentane Betriebspunkt der zu suchenden Drehfeldmaschine gefunden und der Suchlauf ist beendet, so daß der Umrichter mit seiner Steuerung auf die noch drehende Drehfeldmaschine zugeschaltet werden kann. Mittels dieses Verfahrens kann die Suchgeschwindigkeit des Suchlaufs erheblich erhöht werden.

Aus der DE 35 43 941 A1 ist ein Verfahren zum Ermitteln der Drehzahl einer noch drehenden Drehfeldmaschine bekannt. Bei diesem Verfahren wird wenigstens eine der durch die Remanenz des Läufers in den Statorwicklungen induzierten, in ihrer Frequenz der Läuferdrehzahl entsprechenden Sinusspannung ausgewertet. Dadurch wird wenigstens eine Sinusspannung, die an einer Statorklemme ansteht, mittels eines Rechteckformers in eine symmetrisch verlaufende Rechteckspannung umgewandelt. Die Frequenz und die Phasenlage der Rechteckspannung stimmt mit der Frequenz und der Phasenlage der induzierten Sinusspannung überein. Anschließend wird aus dieser Rechteckspannung ein ihrer Frequenz proportionales Ausgangssignal gebildet. Da die Frequenz bzw. die Periodendauer dieser induzierten Sinusspannung nicht vom Maschinentyp oder der Maschinentemperatur abhängig ist, erhält man ein Verfahren, daß allgemein bei Drehfeldmaschinen gilt. Durch die Bestimmung der Drehzahl der noch drehenden Drehfeldmaschine kann man einerseits den Umrichter mit der der Läuferdrehzahl entsprechenden Frequenz auf die noch drehende Drehfeldmaschine zuschalten und andererseits ist die Geschwindigkeit des Suchlaufs erheblich vergrößert, weil bei diesem Verfahren die Suchgeschwindigkeit nicht mehr von dem Frequenzfenster der Drehfeldmaschine abhängig ist.

Es wurde nun festgestellt, daß unterhalb einer Drehzahl von 1 Hz keine Remanenzmessung mehr möglich ist, so daß angenommen werden kann, daß sich der Antrieb im Stillstand befindet. Außerdem kann man selbst noch nach Tagen die Remanenz einer Synchronmaschine messen, d.h., die Drehzahl des Antriebs kann noch ermittelt werden.

Der Erfindung liegt nun die Aufgabe zugrunde, ein Verfahren und eine Vorrichtung zum Wiederanlassen eines Induktionsmotors, der sich infolge eines Trägheitsmoments dreht, anzugeben, wobei der Antrieb möglichst stoß- und momentenfrei zu fangen ist.

Diese Aufgabe wird erfindungsgemäß gelöst mit den im Anspruch 1 angegebenen Verfahrensschritten.

Bei diesem erfindungsgemäßen Verfahren werden wenigstens zwei Remanenzfrequenzwerte aus zu unterschiedlichen Zeitpunkten gemessenen Remanenzspannungswerten ermittelt, aus denen dann ein Beschleunigungswert des "austrudelnden" Motors bestimmt wird. Am Ende dieser genannten Beschleunigungsmessung wird der Ausgangsfrequenzwert auf den letzten ermittelten Remanenzfrequenzwert dieser Beschleunigungsmessung gesetzt. An diese Beschleunigungsmessung schließt sich das Fangen des Motors an. Das Fangen findet während einer einstellbaren Erregungszeit statt. Mit dem Start der Erregungszeit sind die Wechselrichterimpulse freigegeben. Mit der Freigabe der Wechselrichterimpulse geht sofort die Remanenz der Maschine verloren. Deshalb wird während der Erregeungszeit ausgehend vom gesetzten Ausgangsfreuqenzwert des Frequenzwandlers der Ausgangsfrequenzwert mit dem ermittelten Beschleunigungswert interpoliert, so daß der Ausgangsfrequenzwert dem Drehzahl-Istwert der infolge eines Trägheitsmoments drehenden Maschine nachgeführt wird. Somit stellt die Interpolation des Ausgangsfrequenzwertes des Frequenzwandlers eine Nachbildung des Drehzahl-Istwertes der "austrudelnden" Maschine dar, d.h., es wird eine Meßwertersatzgröße ermittelt. Gleichzeitig wird während der Erregungszeit der Maschinenfluß durch Hochsteuern des Ausgangsspannungswertes des Frequenzwandlers aufgebaut. Sobald die einstellbare Erregungszeit abgelaufen ist, wird der Zustand "Fangen" verlassen und in den Regelungsbetrieb gewechselt. Dabei wird vom letzten ermittelten interpolierten Ausgangsfrequenzwert des Frequenzwandlers ausgehend die Drehzahl entsprechend einer eingestellten Hochlaufzeit wieder auf die ursprüngliche Drehzahl geführt.

Um die Momentenbildung während des Fangvorgang so gering wie möglich zu halten, sollte der Motor beispielsweise 90 % seiner Magnetisierung abgebaut haben. Die Entregungszeit, die mit dem Ausschalten des Frequenzwandlers gestartet wird, wird deshalb auf das 2,3-fache der Läuferzeitkonstante eingestellt.

Während der einstellbaren Beschleunigungsmeßzeit wird die Steigung zwischen den ersten und den letzten ermittelten Remanenzfrequenzwert berechnet. Je kürzer die Meßzeit, umso schneller wird die Maschine gefunden. Die Beschleunigungsmeßzeit wird in eine Anzahl von Perioden der Remanenzspannung umgerechnet, so daß sich mit ändernder Drehzahl die tatsächliche Beschleunigungsmeßzeit geringfügig mit ändert. Die Beschleunigungsmeßzeit soll wenigstens der Zeit zweier Perioden der Remanenzdrehzahl entsprechen.

Mittels der einstellbaren Erregungszeit kann die Dauer des Flußaufbaus bestimmt werden. Je länger die einstellbare Erregungszeit ist, umso momentenfreier arbeitet die Fangschaltung. Je kürzer die Erregungszeit ist, umso schneller erfolgt der Stromanstieg und der Übergang zum Regelungsbetrieb.

Da geringe Remanenzspannungen auswertbar sind, kann bis zu Frequenzen von 1 Hz die Maschine gefangen werden. Durch die Einstellbarkeit der Entregungs- und Erregungszeit sowie der Beschleunigungszeit kann direkt Einfluß auf die Güte des Fangens in Bezug auf entstehende Drehmomente genommen werden. Die Geschwindigkeit, mit der ein Antrieb gefangen werden kann, richtet sich praktisch nur nach seiner Läuferzeitkonstante. Die Beschleunigungzeit ist im Vergleich zu üblichen Er- und Entregungszeiten als klein anzusehen. Das Fangen einer sich drehenden Induktionsmaschine kann somit in kürzester Zeit relativ stoßfrei durchgeführt werden. Der Fangvorgang ist in fast allen Frequenzbereich gleich schnell, da die Drehzahl nicht gesucht werden muß. Selbst bei Frequenzen unter 5 Hz wird die Auslaufbeschleunigung gut nachgebildet, obwohl der zeitliche Abstand der Meßpunkte immer größer wird. Durch die Interpolation wird selbst in Bereichen, in denen ein brauchbarer Remanenzwert vorliegt bzw. meßbar ist, eine geeignete Meßwertersatzgröße geschaffen.

Vorteilhafte Ausgestaltungen des Verfahrens sind den Unteransprüchen 2 bis 9 zu entnehmen.

Im Anspruch 10 ist eine Vorrichtung zur Durchführung des Verfahrens angegeben.

Vorteilhafte Ausgestaltungen der Vorrichtung sind den Unteransprüchen 11 bis 14 zu entnehmen.

Zur weiteren Erläuterung der Erfindung wird auf die Zeichnung Bezug genommen, in der ein Ausführungsbeispiel einer Vorrichtung zur Durchführung des Verfahrens nach der Erfindung schematisch veranschaulicht ist.

Figur 1 zeigt ein Blockschaltbild einer Ausführung der erfindungsgemäßen Steuer- und Regeleinrichtung, in

Figur 2 ist ein Blockschaltbild einer Flußaufbaueinrichtung näher dargestellt, die

Figur 3 veranschaulicht ein Blockschaltbild einer Einrichtung zur Bestimmung eines Beschleunigungswertes, die

Figur 4 zeigt die Umrichterzustände in einem Diagramm über der Zeit t,

Figur 5 zeigt den Frequenz- und Drehzahlverlauf des Antriebs in einem Diagramm über der Zeit t,

Figur 6 zeigt den Magnetisierungsstromverlauf in eiem Diagramm über der Zeit t, in

Figur 7 sind die Er- und Entregungsphasen und die Beschleunigungsphase in einem Diagramm über der Zeit t dargestellt und die

Figur 8 veranschaulicht ein Ablaufdiagramm, das die Arbeitsweise des erfindungsgemäßen Verfahrens wiedergibt.

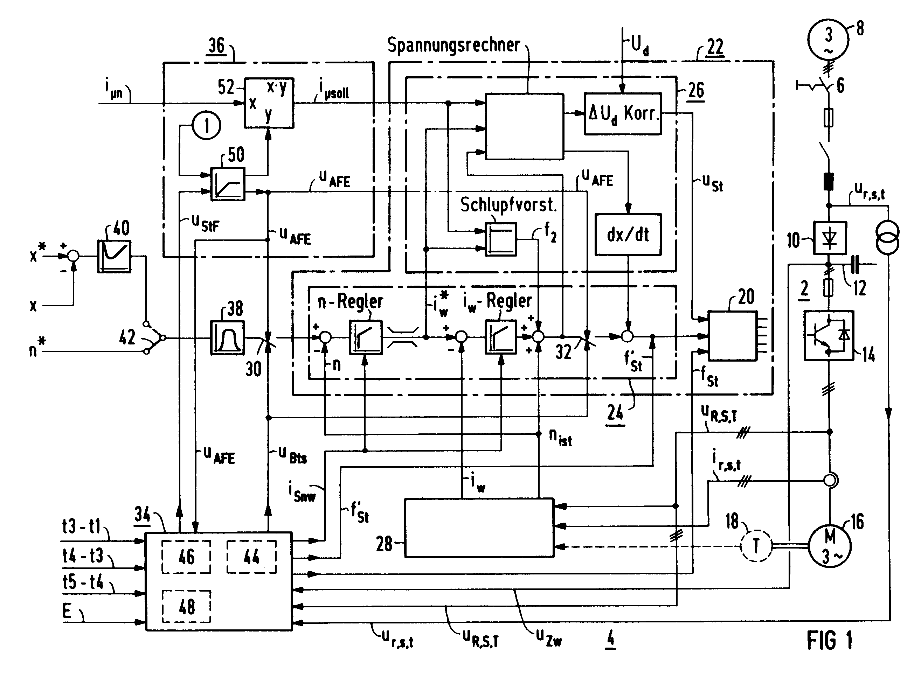

In der Figur 1 ist ein Frequenzwandler 2 mit zugehöriger Steuer- und Regeleinrichtung 4 dargestellt.

Als Frequenzwandler 2 ist ein Pulsumrichter vorgesehen, der über einen Schalter 6 mit einer Wechselspannungsquelle 8 verbunden ist. Eingangsseitig weist dieser Pulsumrichter 2 einen netzseitigen Stromrichter 10 auf, der aus der Netzspannung $u_{r,s,t}$ derWechselspannungsquelle 8 eine konstante Gleichspannung $U_{Zw}$ erzeugt. Diesem Gleichrichter 10 ist ein Spannungszwischenkreis 12 nachgeschaltet, der die erzeugte Gleichspannung $U_{Zw}$ glättet. Ausgangsseitig ist der Pulsumrichter 2 mit einem maschinenseitigen Stromrichter 14 versehen. Dieser Stromrichter 14 ist ein Wechselrichter, der aus der konstanten Gleichspannung $U_{Zw}$ ein Drehspannungssystem $u_{R,S,T}$ mit einstellbarer Frequenz $f_w$ und Spannung formt. Am Wechselrichterausgang 14 ist ein Induktionsmotor 16, beispielsweise ein Drehstromasynchronmotor, angeschlossen. Dieser Motor 16 kann mit einer Tachomaschine 18 versehen sein, dadurch ausgedrückt, daß die Tachomaschine 18 und das gebildete Tachosignal mittels einer unterbrochenen Linie dargestellt ist. Die Pulsmuster für die Ansteuerung des Wechselrichters 14 werden im Steuersatz 20 erzeugt. Dieser Steuersatz 20 ist Bestandteil einer bekannten Steuer- und Regeleinrichtung 22. Diese Steuer- und Regeleinrichtung 22 ist aus dem Aufsatz "SIMOVERT-P-Umrichter für Drehstromantriebe von 30 bis 900 kW" abgedruckt in "Drehzahlveränderbare Antriebe in der Praxis", Bereich Energie-und Automatisierungstechnik, Antriebs- und Regelungstechnik, Siemens, Februar 1985, Seiten 34 bis 38, Bestell-Nr. A19100-E319-A365.

Diese Steuer- und Regeleinrichtung 22 ist vollständig digitalisiert, wobei zum Verständnis die einzelnen Funktionen dieser Steuer- und Regeleinrichtung 22 durch Blöcke dargestellt sind. Die Regelung ist eine vektorielle Regelung und besteht aus einem Frequenzkanal 24, einem Amplitudenkanal 26 und einem Istwertrechner 28. Der Frequenzkanal 24 ist eingangs- und ausgangsseitig jeweils mit einem Schalter 30 und 32 versehen. Der Istwertrechner 28 berechnet aus den Istwerten Motorstrom $i_{R,S,T}$ und Motorspannung $u_{R,S,T}$ die feldorientierten Stromkomponenten $i_\mu$ und $i_w$ und einen Drehzahl-Istwert $n_{ist}$. Der Stromvektor $i_w$ wird zusammen mit dem ermittelten Drehzahl-Istwert $n_{ist}$ dem Frequenzkanal 24 zugeführt. Am Ausgang des Frequenzkanals 24 steht ein Frequenz-Stellwert $f_{St}$ und am Ausgang des Amplitudenkanals 26 steht ein Amplituden-Stellwert $u_{St}$ an. Diese Stellgrößen $u_{St}$ und $f_{St}$ werden dem Steuersatz 20 zugeführt, der daraus Ansteuerimpulse für den Wechselrichter 14 erzeugt.

Die erfindungsgemäße Steuer- und Regeleinrichtung 4 für den Pulsumrichter 2 besteht aus der bekannten Steuer- und Regeleinrichtung 22, einer Ablaufsteuerung 34 und einer Flußaufbaueinrichtung 36. Außerdem ist beispielsweise noch ein Hochlaufgeber 38 für die Nenndrehzahl und ein Technologieregler 40 vorgesehen, der über einen Umschalter 42 mit dem Hochlaufgeber 38 verbunden ist.

Der Ablaufsteuerung 34 sind die Istwerte der Motorspannungen $u_{R,S,T}$, der Zwischenkreisspannung $U_{Zw}$ und der Netzspannung $u_{r,s,t}$ zugeführt. Außerdem können über ein nicht dargestelltes Bedienfeld eine Entregungszeit t3-t1, eine Beschleunigungsmeßzeit t4-t3 und eine Erregungszeit t5-t4 eingestellt und der Ablaufsteuerung 34 zugeführt werden. Außerdem wird ein Einschaltsignal E ebenfalls über das Bedienfeld der Ablaufsteuerung 34 zugeführt. Die Ablaufsteuerung 34 erzeugt einen Frequenz-Stellwert $f'_{St}$ der die Ausgangsfrequenz $f_w$ des Frequenzwandlers 2 während des Wiederanlassens des Motors 16 führt, Setzsignale $i_{Snw}$ für die Regler des Frequenzkanals 24, ein Startsignal $u_{StF}$ für die Flußaufbaueinrichtung 36 und ein Betätigungssignal $u_{Bts}$ für die Schalter 30 und 32. Die Flußaufbaueinrichtung 36 erzeugt ebenfalls ein Steuersignal $u_{AFE}$, das der Ablaufsteuerung 34 und den Schaltern 30 und 32 zugeführt ist. Dieses Steuersignal $u_{AFE}$ signalisiert, daß der Flußaufbau beendet ist und in den Regelungsbetrieb geschaltet werden kann.

Die Ablaufsteuerung 34 enthält eine Remanenzerfassungseinrichtung 44, eine Einrichtung 46 zur Bestimmung eines Beschleunigungswertes a und eine Einrichtung 48 zur Ermittlung eines Frequenz-

Stellwertes $f'_{St}$ zum Führen der Ausgangsfrequenz $f_w$ des Frequenzwandlers 2. Der Übersichtlichkeit halber sind die einzelnen Einrichtungen 44, 46 und 48 jeweils nur durch einen Block angedeutet.

Ausführungsformen für die Remanenzerfassungseinrichtung 44 sind der DE 35 43 941 A1 zu entnehmen. Auch in der DE 35 36 227 A1 ist eine Ausführungsform einer Remanenzerfassungseinrichtung 44 näher dargestellt.

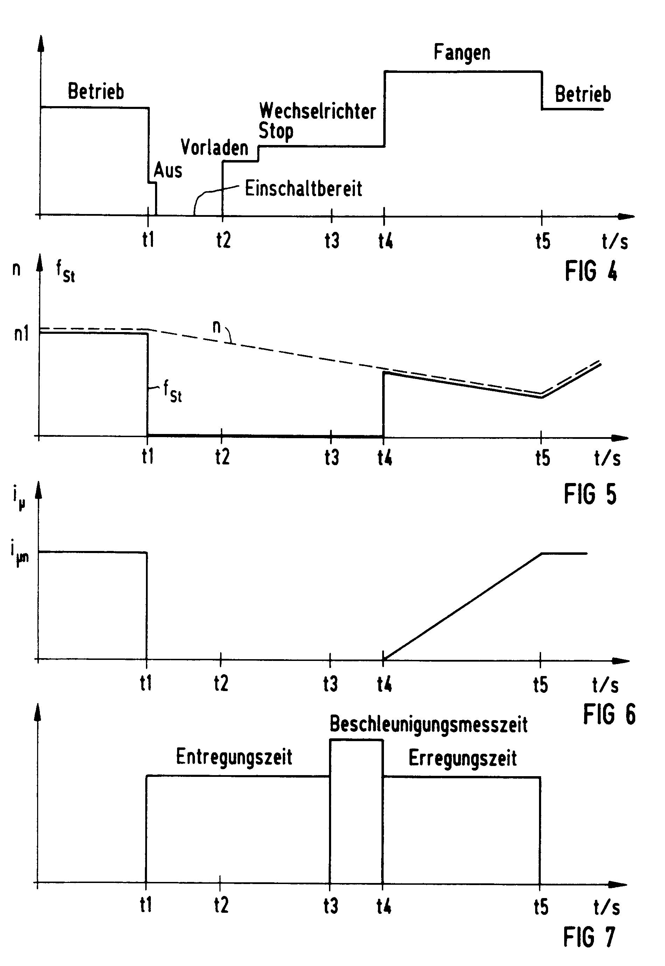

Eine Ausführungsform der Einrichtung 46 zur Bestimmung eines Beschleunigungswertes a ist beispielhaft in der Figur 3 näher dargestellt.

Als Einrichtung 48 zur Ermittlung eines Frequenz-Stellwertes $f'_{St}$ zum Führen der Ausgangsfrequenz $f_w$ des Pulsumrichters 2 kann beispielsweise eine Rechenschaltung vorgesehen sein, die ausgeht von einem Remanenzfrequenzwert $f_R$ mittels des ermittelten Beschleunigungswertes a die Frequenz-Stellwerte $f'_{St}$ interpoliert.

Die dargestellte Flußaufbaueinrichtung 36 besteht aus einem Fluß-Hochlaufgeber 50 mit nachgeschaltetem Multiplizierer 52. Am ersten Eingang des Multiplizierers 52 steht ein Magnetisierungsstrom-Nennwert $i_{\mu n}$ an. Dem Fluß-Hochlaufgeber 50 ist das von der Ablaufsteuerung 34 erzeugte Startsignal $u_{StF}$ zugeführt. Außerdem steht am Fluß-Hochlaufgeber 50 ein "1"-Signal an, wodurch nach dem Start des Hochlaufgebers 50 an dessen einem Ausgang ein Signal ansteht, dessen Amplitude von Null auf Eins hochläuft. Erreicht die Amplitude den Wert Eins, so wird ein Steuersignal $u_{AFE}$ generiert, das die Schalter 30 und 32 wieder schließt und die Ablaufsteuerung 34 zurücksetzt. Aktiviert wird die Ablaufsteuerung 34 dadurch, daß die Netzspannungen $u_{r,s,t}$ kurzzeitig ausfallen und dann wiederkehren (Spannungsversorgung wieder vorhanden).

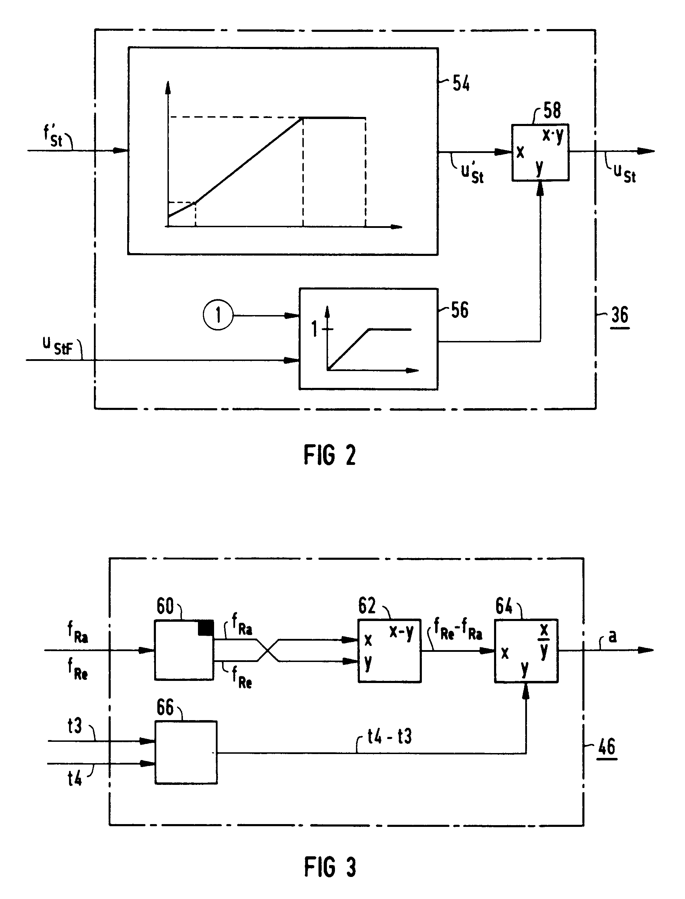

Eine weitere Ausführungsform der Flußaufbaueinrichtung 36 ist in der Figur 2 näher dargestellt. Diese Flußaufbaueinrichtung 36 arbeitet nach dem Prinzip der Kennliniensteuerung. Die Flußaufbaueinrichtung 36 besteht aus einem U/f-Kennliniengeber 54, einem Hochlaufgeber 56 und einem Multiplizierer 58. Der erste Eingang des Multiplizierers 58 ist mit dem Ausgang des U/f-Kennliniengebers 54 und sein zweiter Eingang ist mit dem Ausgang des Hochlaufgebers 56 verknüpft. Eingangsseitig ist der U/f-Kennliniengeber 54 mit der Ablaufsteuerung 34, insbesondere mit der Einrichtung 48 zur Ermittlung eines Frequenz-Stellwertes $f'_{St}$ zum Führen der Ausgangsfrequenz $f_w$ des Pulsumrichters 2, verbunden. Eingangsseitig steht am Hochlaufgeber 56 ein "1"-Signal und das Start-Signal $u_{StF}$ der Ablaufsteuerung 34 an, wodurch an seinem Ausgang ein Signal generiert wird, dessen Amplitude von Null auf Eins hochläuft. Dadurch wird der aus dem Frequenz-Spannungs-Verhältnis resultierende Spannungs-Stellwert $u'_{St}$ mit der ausgangsseitig am Hochlaufgeber 56 anstehenden Amplitude bewertet. Durch diesen ansteigenden bewerteten Spannungs-Stellwert $u_{St}$ wird der Stromanstieg im Motor 16 verlangsamt, so daß sich ein Fluß in der Maschine 16 aufbaut.

Die Figur 3 zeigt ein Ausführungsbeispiel der Einrichtung 46 zur Bestimmung eines Beschleunigungswertes a. Dieser Beschleunigungswert a wird gemäß folgender Gleichung

$$a = \frac{f_{Re} - f_{Ra}}{t4 - t3}$$

berechnet, wobei

$f_{Ra}$ = Remanenzfrequenzwert am Anfang der Beschleunigungsmeßzeit,
$f_{Re}$ = Remanenzfrequenzwert am Ende der Beschleunigungsmeßzeit,
t4-t3 = Beschleunigungsmeßzeit
ist.

Die Einrichtung 46 enthält einen Speicher 60, einen Differenzbildner 62, einen Quotientenbildner 64 und einen Zähler 66. Eingangsseitig ist der Speicher 60 und der Zähler 66 angeordnet. Dem Speicher 60 werden der Remanenzfrequenzwert $f_{Ra}$ am Anfang der Beschleunigungsmeßzeit t4-t3 und der Remanenzfrequenzwert $f_{Re}$ am Ende der Beschleunigungsmeßzeit t4-t3 zugeführt. Der Zähler 66 wird zum Zeitpunkt t3 gestartet und zum Zeitpunkt t4 gestoppt und der Zählerstand t4-t3 an den y-Eingang des Quotientenbildners 64 weitergegeben. Die zwischengespeicherten Remanenzfrequenzwerte $f_{Ra}$ und $f_{Re}$ werden den Eingängen des nachgeschalteten Differenzbildners 62 zugeführt, wobei der Remanenzfrequenzwert $f_{Re}$ dem x-Eingang und der Remanenzfrequenzwert $f_{Ra}$ dem y-Eingang zugeführt werden. Der Differenzwert $f_{Re}$-$f_{Ra}$ wird dem x-Eingang des nachgeschalteten Quotientenbildners 64 zugeführt, an dessen Ausgang dann ein Beschleunigungswert a ansteht. Diese Ausführungsform soll beispielhaft für die Einrichtung 46 zur Ermittlung eines Beschleunigungswertes a sein.

Da die bekannte Steuer- und Regeleinrichtung 22 des Pulsumrichters 2 in Mikroprozessortechnik ausgeführt ist, ist es vorteilhaft, daß die Ablaufsteuerung 34 und die Flußaufbaueinrichtung 36 ebenfalls in Mikroprozessortechnik ausgeführt ist.

Anhand der Figuren 4 bis 8 wird die Arbeitsweise der Ablaufsteuerung 34 zusammen mit der Flußaufbaueinrichtung 36 näher erläutert:
In Figur 4 sind die Umrichterzustände in einem Diagramm über der Zeit t dargestellt. Bis zum Zeitpunkt t1 befindet sich der Antrieb im geregelten Betrieb. Zum Zeitpunkt t1 wird der Umrichter 2 ausgeschaltet, infolge eines kurzzeitigen Netzausfalls. Dies wird von der Ablaufsteuerung 34 erkannt, die die Wechselrichterimpulse für den Wechselrichter 14 sperrt, wenn die Versorgungsspannung wiedergekehrt ist. Gleichzeitig wird eine vorbestimmte Entregungszeit t3-t1 gestartet. Dadurch wechselt der Pulsumrichter 2 in den Wartezustand "Einschaltbereit". Bis zum Zeitpunkt t1 drehte sich der Motor 16 mit einer Drehzahl n1 (Figur 5) und dieser Maschine 16 wurde ein Magnetisierungsstrom-Nennwert $i_{\mu n}$ zugeführt (Figur 6). Zum Zeitpunkt t1 werden die Steuerimpulse für den Wechselrichter 14 gesperrt, wodurch die Ausgangsfrequenz $f_w$ des Frequenzwandlers 2 Null ist und die Induktionsmaschine 16 infolge eines Trägheitsmoments noch dreht, gekennzeichnet durch eine abnehmende Drehzahlkennlinie (Figur 5). Es gibt aber auch Antriebe, beispielsweise einen Förderantrieb, wobei infolge einer Last die Drehzahlkennlinie aufsteigt. Zum Zeitpunkt t1 werden auch die Schalter 30 und 32 des Frequenzkanals 24 der Steuer- und Regeleinrichtung 22 des Pulsumrichters 2 geöffnet. Beim automatischen Wiedereinschalten des Pulsumrichters 2 gelangt nach kurzzeitigem Netzausfall ein Einschaltsignal E innerhalb der Entregungszeit t3-t1 (Figur 7) zur Ablaufsteuerung 34. Ein solches Einschaltsignal E kann aber auch von einem Bediener über das Bedienfeld des Pulsumrichters 2 generiert werden. Infolge dieses Einschaltsignals E wird der Spannungszwischenkreis 12 wieder auf seine Zwischenkreisspannung $U_{Zw}$ aufgeladen. Mit Erreichen dieser Zwischenkreisspannung $U_{Zw}$ beginnt der Umrichterzustand "Wechselrichter Stop" (Figur 4).

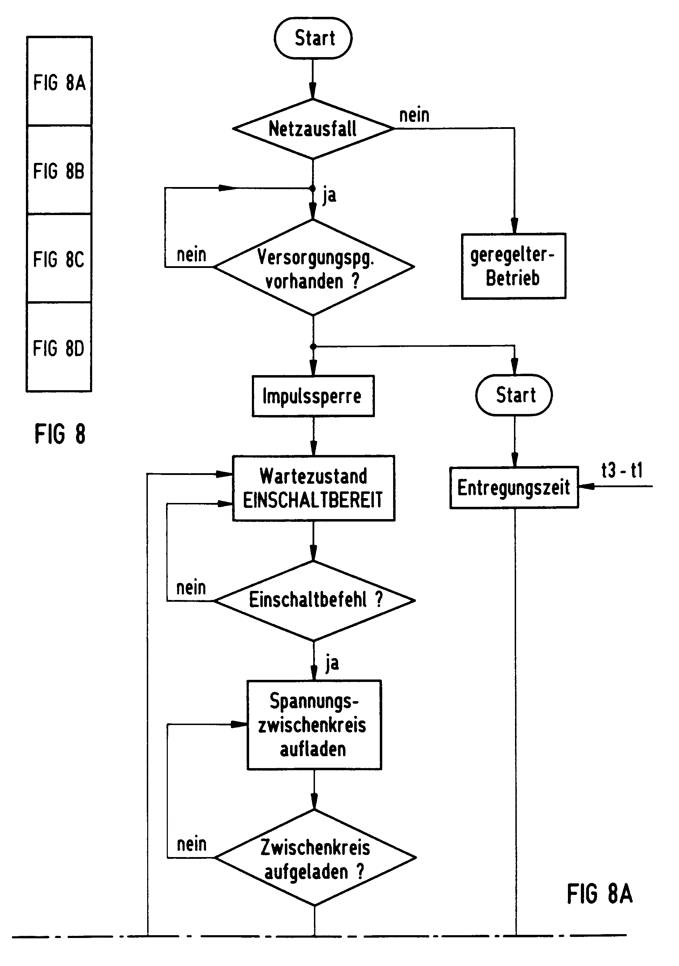

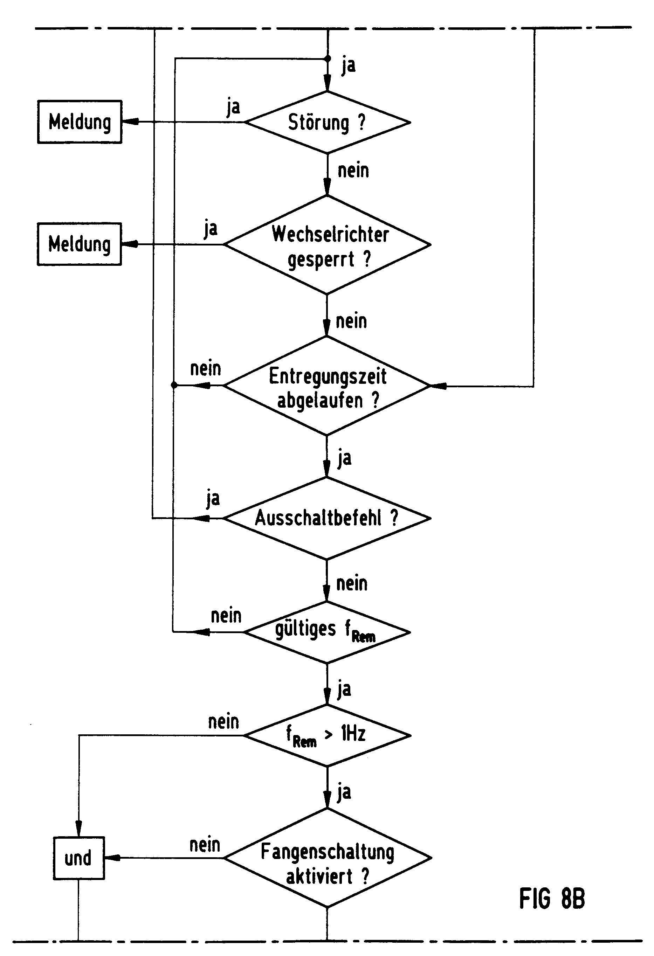

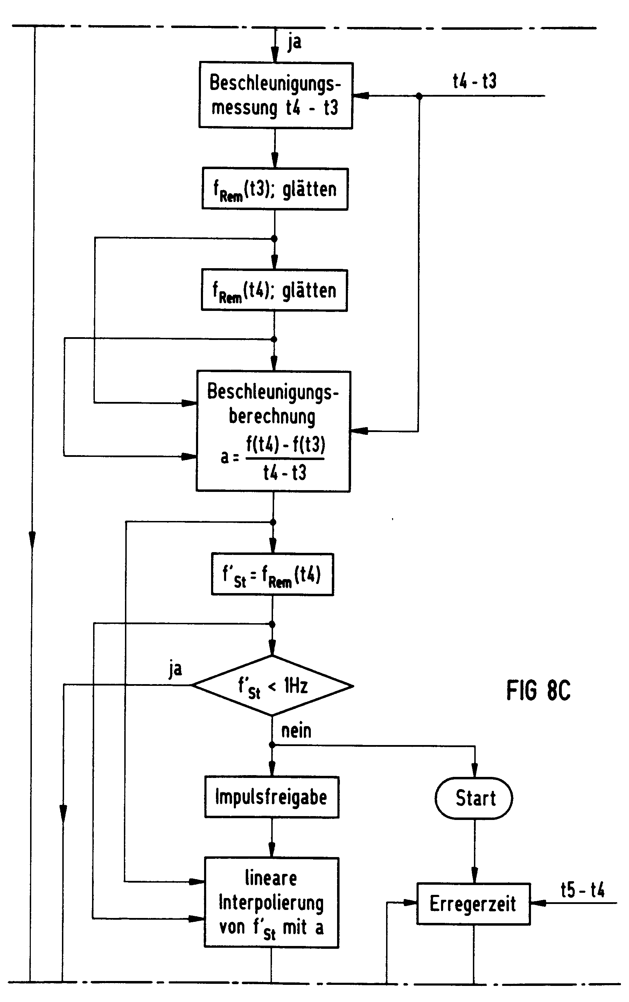

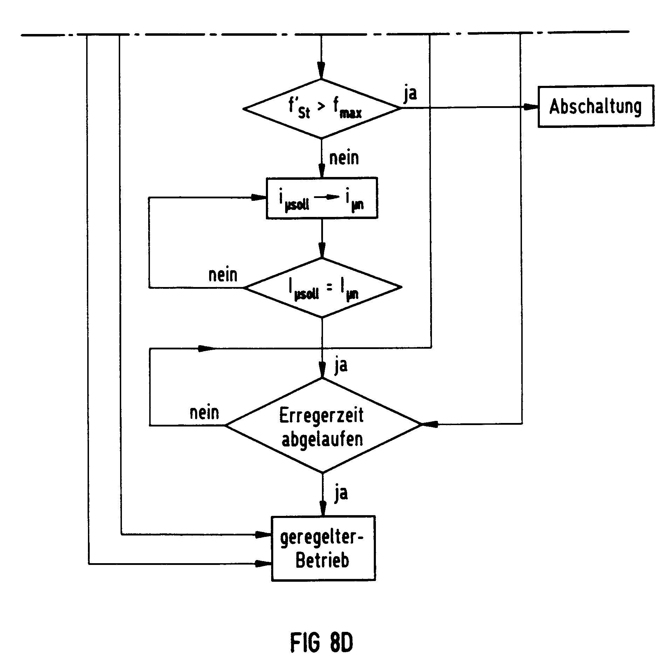

In diesem Zustand sind die Impulse für den Wechselrichter 14 des Umrichters 2 immer noch gesperrt. In diesem Zustand, der innerhalb der Entregungszeit t3-t1 liegt, wird nun entschieden, ob die an die Entregungszeit t3-t1 anschließende Beschleunigungsmeßzeit t4-t3, die eine Voraussetzung für das Fangen der Maschine 16 während der Erregungszeit t5-t4 ist, gestartet werden kann (Figur 7). Um dies zu überprüfen, sind einige Bedingungen notwendig, die gemäß dem Ablaufplan gemäß Figur 8 abgearbeitet werden.

Es wird abgefragt, ob eine Störung oder ein Wechselrichter-Sperrsignal vorliegt. Wird dies bejaht, so wird das Wiederanlaßverfahren mit einer entsprechenden Störmeldung beendet. Wird die Abfrage verneint, wird überprüft, ob die Entregungszeit t3-t1 abgelaufen ist und ob ein Ausschaltbefehl von einer Prozeßführung ansteht. Solange die Entregungszeit t3-t1 noch nicht abgelaufen ist, bleibt das Wiederanlaßverfahren in dieser Abfrageschleife. Steht ein Ausschaltbefehl von einer übergeordneten Prozeßführung an, so wird in den Zustand "Einschaltbereit" gewechselt. Da für die Beschleunigungsmessung Remanenzfrequenzwerte $f_{Ra}$ und $f_{Re}$ vorhanden sein müssen, wird abgefragt, ob ein gültiger Remanenzfrequenzwert

$f_{Rem}$ vorliegt. Wird dies verneint, bleibt das Verfahren in der Abfrageschleife.

Da ein erster ermittelter Remanenzfrequenzwert noch aus den modulierten Spannungssignalen und ein zweiter Frequenzwert aus der unbekannter Rotorstellung bei Eintreffen der Impulssperre resultiert, ist erst der dritte Frequenzwert ein gültiger Remanenzfrequenzwert $f_{Rem}$ mit der die Beschleunigungsmessung beginnen kann.

Außerdem wird in der Abfrageschleife noch abgefragt, ob die Drehzahl bzw. der Remanenzfrequenzwert $f_{Rem}$ größer 1 Hz ist. Wird dies bejaht, so wird abgefragt, ob die Fangschaltung aktiviert ist. Wird dies verneint und ist die Remanenzfrequenz $f_{Rem}$ kleiner als 1 Hz, so wird in den geregelten Betrieb umgeschaltet.

Gemäß Figur 7 beginnt die Beschleunigungsmeßzeit t4-t3 zum Zeitpunkt t3 und endet zum Zeitpunkt t4. Um einen Beschleunigungswert a ermitteln zu können, werden wenigstens zwei Remanenzfrequenzwerte $f_{Rem}$ benötigt, beispielsweise ein Remanenzfrequenzwert $f_{Ra}$ zum Zeitpunkt t3 und ein Remanenzfrequenzwert $f_{Re}$ zum Zeitpunkt t4. Der Beschleunigungswert a gibt die Steigung der Verbindungsgrade zwischen diesen Frequenzwerten $f_{Ra}$ und $f_{Re}$ an (Figur 5). Es können jedoch auch mehrere ermittelte Remanenzfrequenzwerte während der Beschleunigungszeit t4-t3 für die Berechnung des Beschleunigungswertes a verwendet werden. Da innerhalb einer eingestellten Meßzeit t4-t3 je nach Frequenz unterschiedlich viele Meßwerte vorliegen können, wird die Beschleunigung über mindestens zwei Perioden der gemessenen Remanenzspannung ermittelt.

Da die gemessenen Remanenzspannungswerte $u_{Ra}$ und $u_{Re}$ aufgrund von Potentialverschiebungen an den Wechselrichterausgangsklemmen gestört sein können, ist eine Glättung dieser gemessenen Werte notwendig. Die Potentialverschiebungen ergeben sich durch unterschiedliche Spannungsteilerverhältnisse der in Sperrichtung betriebenen Freilaufdioden der Brückenzweige des Wechselrichters 14. Schwankt die Zwischenkreisspannung $U_{Zw}$, so ändert sich die Differenzspannung zwischen zwei Phasen in gleichem Maße. Diese Spannungsschwankungen werden der Remanenzspannung überlagert und führen, da sie die Nulldurchgänge verschieben, zu einer Welligkeit im Remanenzspannungssignal. Mit den gebildeten Frequenzwerten $f_{Ra}$ und $f_{Re}$ und der bekannten Beschleunigungsmeßzeit t4-t3 wird ein Beschleunigungswert a berechnet.

Zum Zeitpunkt t4 beginnt die Erregungszeit t5-t4 (Figur 7) und die Ablaufsteuerung 34 und damit der Frequenzwandler 2 befinden sich im Zustand "Fangen" (Figur 4). Zu diesem Zeitpunkt wird der Frequenz-Stellwert

$$f'_{St} = f_{Re} + \Delta f_{Korr},$$

mit dem die Ausgangsfrequenz $f_w$ des Pulsumrichters 2 geführt wird, auf den letzten ermittelten Remanenzfrequenzwert $f_{Re}$ gesetzt, der, da durch die Glättung des Remanenzspannungssignals ein Zeitfehler entstanden ist, mit einem Korrekturwert beaufschlagt wird, wobei dieser Korrekturwert $\Delta f_{Korr}$ aus dem ermittelten Beschleunigungswert a und einer Glättungszeitkonstanten T1 ermittelt wird. Außerdem wird abgefragt, ob dieser Frequenzwert $f'_{St}$ kleiner als 1 Hz ist. Wird dies bejaht, so wird direkt in den geregelten Betrieb umgeschaltet. Wird dies verneint, so werden die Steuerimpulse für den Wechselrichter 14 wieder freigegeben. Während der einstellbaren Erregungszeit t5-t4 wird ausgehend vom gesetzten Frequenz-Stellwert $f'_{St}$ mittels des berechneten Beschleunigungswertes a die nächsten Frequenz-Stellwerte $f'_{St}$ interpoliert und dem Steuersatz 20 zugeführt (Figur 5). Zum Zeitpunkt t4 ist ebenfalls die Flußaufbaueinrichtung 36 gestartet worden, wodurch ein Magnetisierungsstrom-Sollwert $i_{\mu soll}$ auf einen Magnetisierungsstrom-Nennwert $i_{\mu n}$ geführt wird (Figur 6). Aus diesem geführten Magnetisierungsstrom-Sollwert $i_{\mu soll}$ wird mittels des Amplitudenkanals 26 der Spannungs-Stellwert $u_{St}$ auf einen vorbestimmten Stellwert hochgefahren, wodurch sich in der Maschine 16 ein Fluß aufbaut. Da der Motor 16 in Abhängigkeit einer Last anstatt auszutrudeln beschleunigt werden kann, wird der Frequenz-Stellwert $f'_{St}$ mit einer vorbestimmten Maximalfrequenz $f_{max}$ verglichen. Überschreitet der Frequenz-Stellwert $f'_{St}$ diese Maximalfrequenz $f_{max}$, wird das Fangen der Maschine 16 unterbrochen und der Pulsumrichter 2 mit einer entsprechenden Störmeldung abgeschaltet. Dadurch wird eine Überlast der Maschine 16 verhindert. Sobald der Magnetisierungsstrom-Sollwert $i_{\mu soll}$ gleich dem Magnetisierungsstrom-Nennwert $i_{\mu n}$ ist, wird in den geregelten Betrieb umgeschaltet, in dem die Schalter 30 und 32 des Frequenzkanals 24 mittels des von der Flußaufbaueinrichtung 36 generierten Steuersignals $u_{AFE}$ geschlossen werden. Zu diesem Zeitpunkt t5 ist der Nennfluß in dem Motor 16 aufgebaut und der Frequenz-Stellwert $f'_{St}$ entspricht dem tatsächlichen Drehzahl-Istwert des Motors 16, wodurch stoß- und momentenfrei in den geregelten Betrieb umgeschaltet werden kann. Entsprechend einer eingestellten Hochlaufzeit am Hochlaufgeber 38 wird die Drehzahl des Motors 16 wieder auf den ursprünglichen oder einen neuen Drehzahlwert geführt.

Damit die Steuer- und Regeleinrichtung 22 die Regelung des Wechselrichters 14 ohne Einbrüche bzw. ohne Störung kontinuierlich übernehmen kann, werden während der Erregungszeit t5-t4 die Regler des Frequenzkanals 24 der Steuer- und Regeleinrichtung 22 fortlaufend auf den neuesten Betriebspunkt gesetzt.

Ist der Motor 16 mit einer Tachomaschine 18 ausgestattet, wird während der Erregungszeit t5-t4 der Frequenz-Stellwert $f'_{St}$ laufend auf den Drehzahl-Istwert gesetzt.

Sollte keine Fangenschaltung in der Steuer- und Regeleinrichtung 4 projektiert sein, dient die Remanenzerfassung zur Stillstandsmessung des Motors 16. Dadurch wird ein Einschaltbefehl E, von einem Bediener mittels des Bedienfeldes generiert, wieder zurückgewiesen, wenn erkannt wird, daß der Motor 16 noch dreht. Dies ist der Fall, wenn der ermittelte Remanenzfrequenzwert größer als 1 Hz ist.

Da selbst geringe Remanenzspannungen um 1 V auswertbar sind, kann bis zu Frequenzen von 1 Hz die Maschine 16 gefangen werden. Durch die Einstellbarkeit der Entregungszeit t3-t1 und der Erregungszeit t5-t4, sowie der Beschleunigungsmeßzeit t4-t3, kann direkt Einfluß auf die Güte des Fangens genommen werden, in Bezug auf entstehende Drehmomente. Die Geschwindigkeit, mit der ein Antrieb gefangen werden kann, richtet sich praktisch nur nach seiner Läuferzeitkonstante. Die Beschleunigungszeit t4-t3 ist im Vergleich zur Erregungszeit t5-t4 und zur Entregungszeit t3-t1 als klein anzusehen.

Das Fangen einer sich drehenden Asynchronmaschine 16 kann somit in kürzester Zeit relativ stoßfrei durchgeführt werden. Der Fangenvorgang ist in fast allen Frequenzbereichen gleich schnell, da die Drehzahl nicht gesucht werden muß. Selbst bei Frequenzen unter 5 Hz wird die Auslaufbeschleunigung gut nachgebildet, obwohl der zeitliche Abstand der Meßpunkte immer größer wird. Durch die Interpolation wird selbst in Bereichen, in denen ein brauchbarer Remanenzwert vorliegt bzw. meßbar ist, eine geeignete Meßwertersatzgröße geschaffen.

**Patentansprüche**

1. Verfahren zum Wiederanlassen eines Induktionsmotors (16), der sich infolge eines Trägheitsmoments dreht, wobei beim Wiederanlassen eine Wechselspannungsquelle (8) über einem Frequenzwandler (2) an den Motor (16) angeschlossen und die Motordrehzahl durch Steuerung der Ausgangsfrequenz ($f_w$) und der Ausgangsspannung ($u_{R,S,T}$) des Frequenzwandlers (2) gesteuert wird, bestehend aus folgenden Verfahrensschritten:

a) Ermittlung von wenigstens zwei Remanenzfrequenzwerten ($f_{Ra}, f_{Re}$) aus zu unterschiedlichen Zeitpunkten (t3, t4) gemessenen Remanenzspannungswerten,

b) Bestimmung eines Beschleunigungswertes (a) aus den ermittelten Remanenzfrequenzwerten ($f_{Ra}$, $f_{Re}$) und des gemessenen Zeitdifferenzwertes (t4-t3) mittels folgender Gleichung:

$$a = \frac{f_{Re} - f_{Ra}}{t4 - t3},$$

c) Setzen des Frequenz-Stellwertes ($f'_{St}$) der Ausgangsfrequenz ($f_w$) des Frequenzwandlers (2) auf den letzten ermittelten Remanenzfrequenzwert ($f_{Re}$) während der Beschleunigungsmeßzeit (t4-t3),

d) Interpolation des Frequenz-Stellwertes ($f'_{St}$) mit dem ermittelten Beschleunigungswert (a) innerhalb einer vorbestimmten Erregungszeit (t5-t4),

e) Aufbau des Maschinenflusses innerhalb der Erregungszeit (t5-t4) durch Hochsteuern des Spannungs-Stellwertes ($u_{St}$) der Ausgangsspannung ($u_{R,S,T}$) des Frequenzwandlers (2) und

f) Hochfahren des Drehzahl-Istwertes des Motors ausgehend vom letzten interpolierten Frequenz-Stellwert ($f'_{St}$) der Erregungszeit (t5-t4) auf eine Drehzahl vor Abschaltung des Motors (16).

2. Verfahren nach Anspruch 1, **dadurch gekennzeichnet,** daß die gemessenen Remanenzspannungswerte geglättet werden und der letzte ermittelte Remanenzfrequenzwert ($f_{Ra}$, $f_{Re}$) innerhalb der Beschleunigungsmeßzeit (t4-t3) mit einem aus dem ermittelten Beschleunigungswert (a) und einer Glättungszeitkonstanten (T1) erzeugten Korrekturwert ($\Delta f_{Korr}$) beaufschlagt wird.

3. Verfahren nach Anspruch 1, **dadurch gekennzeichnet,** daß mit Abschaltung der Wechselspannungsquelle (8) eine vorbestimmte Entregungszeit (t3-t1) gestartet und die Wechselrichterimpulse gesperrt werden.

4. Verfahren nach Anspruch 1, **dadurch gekennzeichnet,** daß beim Start der vorbestimmten Erregungszeit (t5-t4) die Wechselrichterimpulse freigegeben werden.

5. Verfahren nach Anspruch 3, **dadurch gekennzeichnet,** daß am Ende der Entregungszeit (t3-t1) Remanenzfrequenzwerte ($f_{Rem}$) ermittelt werden, um festzustellen, ob die Remanenzerfassungseinrichtung (44) einen gültigen Remanenzfrequenzwert ($f_{Rem}$) liefert und ob dieser Remanenzfrequenzwert ($f_{Rem}$) größer ist als ein Stillstandsfrequenzwert ($f_{1Hz}$).

6. Verfahren nach Anspruch 3, **dadurch gekennzeichnet,** daß infolge eines Einschaltsignals (E) während der Entregungszeit (t3-t1) der Spannungszwischenkreis (12) des Frequenzwandlers (2) aufgeladen wird, wodurch der Wechselrichter (14) des Frequenzwandlers (2) in den Zustand "Wechselrichter Stop" gelangt.

7. Verfahren nach Anspruch 5, **dadurch gekennzeichnet,** daß wenn der Remanenzfrequenzwert ($f_{Rem}$) kleiner oder gleich der Stillstandsfrequenz ($f_{1Hz}$) ist, die Ausgangsfrequenz ($f_w$) des Frequenzwandlers (2) vom Stillstand hochgefahren wird und ein Magnetisierungsstrom-Sollwert ($i_{\mu soll}$) auf einen Magnetisierungsstrom-Nennwert ($i_{\mu n}$) gesetzt wird.

8. Verfahren nach Anspruch 1, **dadurch gekennzeichnet,** daß zum Hochsteuern des Ausgangsspannungswertes ($u_{R,S,T}$) des Frequenzwandlers (2) ein Magnetisierungsstrom-Sollwert ($i_{\mu soll}$) innerhalb der Erregungszeit (t5-t4) auf einen Magnetisierungsstrom-Nennwert ($i_{\mu n}$) gesteuert wird.

9. Verfahren nach Anspruch 1, **dadurch gekennzeichnet,** daß zum Hochsteuern des Ausgangsspannungswertes ($u_{R,S,T}$) des Frequenzwandlers (2) ein aus einem Frequenz-Spannungs-Verhältnis resultierender Spannungs-Stellwert ($u'_{St}$) mit einer Amplitude bewertet wird, die innerhalb der Erregeungszeit (t5-t4) von Null auf Eins läuft.

10. Vorrichtung zur Durchführung des Verfahrens nach einem der Ansprüche 1 bis 9 mit einem Frequenzwandler (2), bestehend aus einem Gleichrichter (10), einem Spannungszwischenkreis (12) und einem Wechselrichter (14), mit zugeordneter Steuer- und Regeleinrichtung (22), bestehend aus einem Frequenzkanal (24) und einem Amplitudenkanal (26), wobei am Ausgang des Frequenzwandlers (2) ein Induktionsmotor (16) angeschlossen ist, **dadurch gekennzeichnet,** daß eine Ablaufsteuerung (34), bestehend aus einer Remanenzerfassungseinrichtung (44), einer Einrichtung (46) zur Bestimmung eines Beschleunigungswertes (a) und einer Einrichtung (48) zur Ermittlung eines Frequenz-Stellwertes ($f'_{St}$) zum Führen der Ausgangsfrequenz ($f_w$) des Frequenzwandlers (2), und eine Flußaufbaueinrichtung (36), bestehend aus einem Fluß-Hochlaufgeber (50) mit nachgeschaltetem Multiplizierer (52), an dessen ersten Eingang ein Magnetisierungs-

strom-Nennwert ($i_{\mu n}$) ansteht, vorgesehen sind, wobei die Flußaufbaueinrichtung (36) eingangs- und ausgangsseitig mit der Ablaufsteuerung (34) verknüpft ist, und daß der Frequenzkanal (24) der Steuer-und Regeleinrichtung (22) eingangs- und ausgangsseitig mit einem Schalter (30, 32) versehen ist, wobei diese Schalter (30, 32) mittels der Ablaufsteuerung (34) geöffnet und mittels der Flußaufbaueinrichtung (36) geschlossen werden.

11. Vorrichtung nach Anspruch 10, **dadurch gekennzeichnet,** daß die Flußaufbaueinrichtung (36) aus einem U/f-Kennliniengeber (54), einem Hochlaufgeber (56) und einem Multiplizierer (58) besteht, wobei der Multiplizierer (58) eingangsseitig einerseits mit dem Ausgang des U/f-Kennliniengebers (54) und andererseits mit dem Ausgang des Hochlaufgebers (56), an dessen Eingängen ein "1"-Signal und ein Start-Signal ($u_{StF}$) ansteht, und ausgangsseitig mit einem Steuersatz (20) der Steuer- und Regeleinrichtung (22) des Frequenzwandlers (2) verbunden ist, und daß der U/f-Kennliniengeber (54) eingangsseitig mit einem Ausgang der Ablaufsteuerung (34) verknüpft ist.

12. Vorrichtung nach Anspruch 10, **dadurch gekennzeichnet,** daß die Einrichtung (46) zur Bestimmung eines Beschleunigungswertes (a) aus einem eingangsseitigen Speicher (60) und einem Zähler (66) und ausgangsseitig aus einem Quotientenbildner (64) besteht, dessen y-Eingang mit dem Ausgang des Zählers (66) und dessen x-Eingang mit dem Ausgang eines Differenzbildners (62) verknüpft sind, dessen x-Eingang mit einem zweiten Eingang und dessen y-Eingang mit einem ersten Eingang des eingangsseitigen Speichers (60) verbunden sind.

13. Vorrichtung nach Anspruch 10, **dadurch gekennzeichnet,** daß als Ablaufsteuerung (34) ein Mikrocomputer vorgesehen ist.

14. Vorrichtung nach Anspruch 10, **dadurch gekennzeichnet,** daß als Flußaufbaueinrichtung (36) ein Mikrocomputer vorgesehen ist.

**Claims**

1. Method of restarting an induction motor (16) still rotating as a result of an inertia moment, wherein at restarting an AC voltage source (8) is connected via a frequency converter (2) to the motor (16), and the motor speed is controlled by controlling the output frequency ($f_w$) and the output voltage ($u_{R, S, T}$) of the frequency converter (2), consisting of the following stages:

    a) determining of at least two remanence frequency values ($f_{Ra}$, $f_{Re}$) from remanence voltage values measured at different times (t3, t4),

    b) specifying of an acceleration value (a) from the remanence frequency values determined ($f_{Ra}$, $f_{Re}$) and of the measured time differential (t4-t3) by means of the following equation:

$$a = \frac{f_{Re} - f_{Ra}}{t4 - t3,}$$

    c) setting of the frequency setting value ($f'_{St}$) of the output frequency ($f_w$) of the frequency converter (2) to the last-determined remanence frequency value ($f_{Re}$) during the acceleration measuring time (t4-t3),

    d) interpolation of the frequency setting value ($f'_{St}$) with the determined acceleration value (a) within a predetermined excitation time (t5-t4),

    e) build-up of the motor flux within the excitation time (t5-t4) by raising the voltage setting value ($u_{St}$) of the output voltage ($u_{R, S, T}$) of the frequency converter (2) and

    f) raising of the speed actual value of the motor on the basis of the frequency setting value ($f'_{St}$) last interpolated of the excitation time (t5-t4) to a speed before switching off of the motor (16).

2. Method according to claim 1, characterised in that the measured remanence voltage values are smoothed and the last-determined remanence frequency value ($f_{Ra}$, $f_{Re}$) is acted on within the acceleration measuring time (t4-t3) with a correction value ($\Delta f_{Korr}$) which is a product of the acceleration value determined (a) and a smoothing time constant (T1).

3. Method according to claim 1, characterised in that when the AC voltage source (8) switches off, a predetermined de-excitation time (t3-t1) is started and the inverter pulses are locked.

4. Method according to claim 1, characterised in that at the start of the predetermined excitation time (t5-t4) the inverter pulses are released.

5. Method according to claim 3, characterised in that at the end of the de-excitation time (t3-t1) remanence frequency values ($f_{Rem}$) are determined in order to establish whether the remanence detector (44) is supplying a valid remanence frequency value ($f_{Rem}$) and whether this remanence frequency value ($f_{Rem}$) is greater than a standstill frequency value ($f_{1Hz}$).

6. Method according to claim 3, characterised in that consequent upon a switch-on signal (E) during the de-excitation time (t3-t1), the voltage intermediate circuit (12) of the frequency converter (2) is charged up, whereby the inverter (14) of the frequency converter (2) passes into the state "Stop inverter".

7. Method according to claim 5, characterised in that if the remanence frequency value ($f_{Rem}$) is smaller than or equal to the standstill frequency value ($f_{1Hz}$), the output frequency ($f_w$) of the frequency converter (2) is raised from standstill and a magnetizing current reference value ($i_{\mu soll}$) is set at the magnetizing current nominal value ($i_{\mu n}$).

8. Method according to claim 1, characterised in that in order to raise the output voltage value ($u_{R, S, T}$) of the frequency converter (2), a magnetizing current reference value ($i_{\mu soll}$) is guided to a magnetizing current nominal value ($i_{\mu n}$) within the excitation time (t5-t4).

9. Method according to claim 1, characterised in that in order to raise the output voltage value ($u_{R, S, T}$) of the frequency converter (2), a voltage setting value ($u_{St}'$) resulting from a frequency voltage ratio is evaluated, having an amplitude which runs from zero to one within the excitation time (t5-t4).

10. Device for carrying out the method according to one of claims 1 to 9, having a frequency converter (2), consisting of a rectifier (10), a voltage intermediate circuit (12), and an inverter (14), with an associated control and adjustment device (22), which consists of a frequency channel (24) and an amplitude channel (26), wherein an induction motor (16) is connected to the output of the frequency converter (2), characterised in that the device is provided with a sequential control (34) consisting of a remanence detector (44), a device (46) for determining an acceleration value (a), and a device (48) for determining a frequency setting value ($f_{St}'$) for guiding the output frequency ($f_w$) of the frequency converter (2), and a flux build-up device (36) - which consists of a flux acceleration rate limiter (50) with a multiplier (52) connected in series, at whose first input a magnetizing current nominal value ($i_{\mu n}$) is available, the flux build-up device (36) being linked at the input and output side to the sequential control (34), and in that the frequency channel (24) of the control and adjustment device (22) is provided on the input and output sides with a switch (30, 32), these switches being opened by means of the sequential control (34) and closed by means of the flux build-up device (36).

11. Device according to claim 10, characterised in that the flux build-up device (36) consists of a U/f function generator (54), an acceleration rate limiter (56) and a multiplier (58), the multiplier (58) being connected on the input side to the output of the U/f function generator (54) as well as to the output of the acceleration rate limiter (56) - at whose inputs a "1" signal and a start signal ($u_{StF}$) are generated - and on the output side to the trigger equipment (20) of the control and adjustment device (22) of the frequency converter (2), and in that the U/f function generator (54) is linked on the input side to an output of the sequential control (34).

12. Device according to claim 10, characterised in that the device (46) for specifying an acceleration value (a) consists of a store (60) and counter (66) located on the input side, and a ratio former (64) on the output side, the y-input of the ratio former (64) being linked to the output of the counter (66) whilst its x-input is linked to the output of a differential former (62), whose x-input is connected to a second input and whose y-input is connected to a first input of the input-side store (60).

13. Device according to claim 10, characterised in that the sequential control (34) is a microcomputer.

14. Device according to claim 10, characterised in that the flux build-up device (36) is a microcomputer.

**Revendications**

1. Procédé pour le redémarrage d'un moteur à induction (16) qui tourne par suite d'un couple d'inertie, une source (8) de courant alternatif étant, lors du redémarrage, connectée au moteur (16) par l'intermédiaire d'un convertisseur de fréquence (2) et la vitesse de rotation du moteur étant commandée en commandant la fréquence de sortie ($f_w$) et la tension de sortie ($U_{R, S, T}$) du convertisseur de fréquence (2), comportant les opérations suivantes :

    a) établissement d'au moins deux valeurs de fréquence de rémanence ($f_{Ra}$, $f_{Re}$) à partir de valeurs de tension de rémanence mesurées à des instants différents (t3, t4),

b) détermination d'une valeur d'accélération (a) à partir des valeurs de fréquence de rémanence établies ($f_{Ra}$, $f_{Re}$) et de la valeur de différence de temps (t4-t3) mesurée, au moyen de l'équation suivante :

$$a = \frac{f_{Re} - f_{Ra}}{t4 - t3}$$

c) fixation de la valeur de réglage de fréquence ($f'_{St}$) de la fréquence sortie ($f_W$) du convertisseur de fréquence (2) à la dernière valeur de fréquence de rémanence ($f_{Re}$) établie, pendant le temps de mesure de l'accélération (t4-t3),

d) interpolation de la valeur de réglage de fréquence ($f'_{St}$) avec la valeur d'accélération (a) établie, pendant un temps d'excitation (t5-t4) déterminé à l'avance,

e) instauration du flux de moteur pendant le temps d'excitation (t5-t4) en commandant l'augmentation de la valeur de réglage de tension ($u_{St}$) de la tension de sortie ($U_{R, S, T}$) du convertisseur de fréquence (2), et

f) augmentation de la valeur réelle de la vitesse de rotation du moteur, à partir de la dernière valeur de réglage de fréquence ($f'_{St}$) interpolée du temps d'excitation (t5-t4) jusqu'à atteindre une vitesse de rotation avant la coupure du moteur (16).

2. Procédé selon la revendication 1, caractérisé en ce que les valeurs mesurées de tension de rémanence sont lissées et en ce que la dernière valeur de fréquence de rémanence ($f_{Ra}$, $f_{Re}$) établie est corrigée pendant le temps de mesure de l'accélération (t4-t3) par une valeur de correction ($\Delta f_{korr}$) obtenue à partir de la valeur d'accélération (a) établie et d'une constante de temps de lissage (T1).

3. Procédé selon la revendication 1, caractérisé en ce qu'un temps d'excitation (t3-t1) déterminé à l'avance débute avec la déconnexion de la source (8) de courant alternatif et que les impulsions d'onduleur sont bloquées.

4. Procédé selon la revendication 1, caractérisé en ce que lors du début du temps d'excitation (t5-t4) déterminé à l'avance les impulsions d'onduleur sont libérées.

5. Procédé selon la revendication 3, caractérisé en ce qu'à la fin du temps d'excitation (t3-t1), des valeurs de fréquence de rémanence ($f_{Rem}$) sont établies en vue de constater si le dispositif capteur (44) de rémanence délivre une valeur convenable ($f_{Rem}$) de fréquence de rémanence et si cette valeur ($f_{Rem}$) de fréquence de rémanence est supérieure à une valeur de fréquence d'arrêt ($f_{1Hz}$).

6. Procédé selon la revendication 3, caractérisé en ce que le circuit intermédiaire (12) de tension du convertisseur de fréquence (2) est sous charge par suite d'un signal de mise en marche (E) pendant le temps d'excitation (t3-t1), l'onduleur (14) du convertisseur de fréquence (2) parvenant à l'état "arrêt de l'onduleur".

7. Procédé selon la revendication 5, caractérisé en ce que lorsque la valeur de fréquence de rémanence ($f_{Rem}$) est inférieure ou égale à la fréquence d'arrêt ($f_{1Hz}$) la fréquence de sortie ($f_W$) du convertisseur de fréquence (2) augmente à partir de l'arrêt et une valeur de consigne ($i_{\mu sd1}$) du courant de magnétisation est fixée à une valeur nominale ($i_{\mu n}$) de courant de magnétisation.

8. Procédé selon la revendication 1, caractérisé en ce que pour commander en hausse la valeur du courant de sortie ($U_{R, S, T}$) du convertisseur de fréquence (2), une valeur de consigne du courant de magnétisation est fixée à une valeur nominale de courant de magnétisation ($i_{\mu n}$).

9. Procédé selon la revendication 1, caractérisé en ce que pour commander en hausse la valeur ($U_{R, S, T}$) du convertisseur de fréquence (2), une valeur de réglage de tension ($u'_{St}$) résultant d'un rapport fréquence/tension, est évaluée avec une amplitude qui évolue de 0 à un au cours du temps d'excitation (t5-t4).

10. Dispositif pour la mise en oeuvre du procédé selon l'une des revendications 1 à 9, comportant un convertisseur de fréquence (2) composé d'un redresseur (10), d'un circuit intermédiaire de tension (20) et d'un onduleur (14), doté d'un circuit de commande et de réglage, lequel comporte un canal (24) de fréquence et un canal (26) d'amplitude, un moteur à induction (16) étant connecté à la sortie du convertisseur de fréquence (2), caractérisé en ce qu'un dispositif de commande (34) de déroulement, composée d'un dispositif capteur (44) de rémanence, d'un dispositif (46) destiné à la détermination d'une valeur (a) d'accélération et d'un dispositif (48) destiné à établir une valeur de réglage ($f'_{St}$) de fréquence en vue de piloter la fréquence de sortie ($f_W$) du convertisseur de fréquence (2), et un dispositif (36) d'instauration de flux composé d'un capteur (50) d'augmentation de flux doté en aval d'un dispositif de multiplication (52), à la première entrée duquel est appliquée une valeur nominale ($i_{\mu n}$) de courant de magnétisation, sont prévus, le dispositif (36) d'instauration de flux étant connecté à l'entrée et à la sortie au dispositif de commande de déroulement (34) et en ce que le canal (24) de fréquence du dispositif (32) de commande et de réglage (22) est muni à l'entrée et à la sortie d'un interrupteur (30, 32), ces interrupteurs (30, 32) étant mis en position d'ouverture au moyen du dispositif (34) de commande de déroulement, et en position de fermeture au moyen du dispositif (36) d'instauration de flux.

11. Dispositif selon la revendication 10, caractérisé en ce que le dispositif (36) d'instauration de flux est constitué d'un capteur (54) de courbes caractéristiques (U/f), d'un capteur (56) d'accélération et d'un dispositif de multiplication (58), le dispositif de multiplication (58) étant connecté du côté entrée d'une part à la sortie du capteur (54) de courbes caractéristiques (U/f) et d'autre part à la sortie du capteur (56) d'accélération, aux entrées duquel sont appliqués un signal "I" et un signal de démarrage ($u_{StF}$), et côté sortie à un bloc de commande (20) du dispositif (22) de commande et de réglage du convertisseur de fréquence (20), et en ce que le capteur (54) de courbes caractéristiques (U/f) est connecté côté entrée à la sortie du dispositif (34) de commande de déroulement.

12. Dispositif selon la revendication 10, caractérisé en ce que le dispositif (46) de détermination d'une valeur d'accélération (a) est constitué d'une mémoire (60) côté entrée et d'un dispositif de comptage (66) et côté sortie d'un dispositif (64) de calcul de quotient dont l'entrée y est raccordée à la sortie du dispositif de comptage (66) et dont l'entrée x est raccordée à la sortie d'un dispositif (62) de calcul de différence, dont l'entrée x est raccordée à une deuxième entrée de la mémoire (60) côté entrée et dont l'entrée y est raccordée à une première entrée de celle-ci.

13. Dispositif selon la revendication 10, caractérisé en ce qu'un micro-ordinateur est prévu en tant que dispositif (34) de commande de déroulement.

14. Dispositif selon la revendication 10, caractérisé en ce qu'un micro-ordinateur est prévu en tant que dispositif (36) d'instauration de flux.

FIG 1

FIG 2

FIG 3

**Betrieb**

**Aus**

**Vorladen**

**Wechselrichter Stop**

**Einschaltbereit**

**Fangen**

**Betrieb**

t1    t2    t3    t4    t5    t/s

**FIG 4**

$n$    $f_{St}$

$n1$

$n$

$f_{St}$

t1    t2    t3    t4    t5    t/s

**FIG 5**

$i_\mu$

$i_{\mu n}$

t1    t2    t3    t4    t5    t/s

**FIG 6**

**Beschleunigungsmesszeit**

**Entregungszeit**

**Erregungszeit**

t1    t2    t3    t4    t5    t/s

**FIG 7**

15

FIG 8A

FIG 8B

FIG 8C

FIG 8D

**FIG 8**

```
                          ( Start )
                             │
                             ▼
                         ╱Netzausfall╲──── nein ──────────┐
                         ╲          ╱                      │
                             │ ja                          │
        ┌──────────►─────────┤                             │
        │                    ▼                             ▼
        │              ╱Versorgungspg.╲            ┌────────────────┐
      nein ────────────╲vorhanden ?   ╱            │  geregelter-   │
                        ╲            ╱              │   Betrieb      │
                             │                      └────────────────┘
                             │◄─────────────────────────┐
                             ▼                           ▼
                    ┌────────────────┐           ( Start )
                    │  Impulssperre  │                   │
                    └────────────────┘                   ▼
                             │                    ┌────────────────┐   t3 - t1
                             ▼                    │ Entregungszeit │ ◄────
  ┌──────►──┌────────────────┐                    └────────────────┘
  │         │  Wartezustand  │                           │
  │  ┌──────┤ EINSCHALTBEREIT│                           │
  │  │      └────────────────┘                           │
  │  │               │                                   │
  │  │               ▼                                   │
  │ nein ────╱Einschaltbefehl ?╲                         │
  │          ╲                 ╱                         │
  │               │ ja                                   │
  │               ▼                                      │
  │      ┌────────────────┐                              │
  │      │   Spannungs-   │                              │
  │  ┌───┤ zwischenkreis  │                              │
  │  │   │   aufladen     │                              │
  │  │   └────────────────┘                              │
  │  │            │                                      │
  │  │            ▼                                      │
  │ nein ──╱ Zwischenkreis ╲                             │
  │        ╲ aufgeladen ?  ╱                             │
  │             │                                        │
  └─────────────┘                                        │
  ─ ─ ─ ─ ─ ─ ─ ─ ─ ─ ─ ─ ─ ─ ─ ─ ─ ─ ─ ─ ─ ─ ─ ─ ─ ─ ─ ─
```

**FIG 8A**

16

FIG 8B

ja

Beschleunigungsmessung t4 - t3

t4 - t3

$f_{Rem}(t3)$; glätten

$f_{Rem}(t4)$; glätten

Beschleunigungsberechnung

$$a = \frac{f(t4) - f(t3)}{t4 - t3}$$

$f'_{St} = f_{Rem}(t4)$

ja

$f'_{St} < 1Hz$

FIG 8C

nein

Impulsfreigabe

Start

lineare
Interpolierung
von $f'_{St}$ mit a

Erregerzeit

t5 - t4

$f'_{St} > f_{max}$ — ja → Abschaltung

nein

$i_{\mu soll} \rightarrow i_{\mu n}$

$I_{\mu soll} = I_{\mu n}$ — nein

ja

Erregerzeit abgelaufen — nein

ja

geregelter-Betrieb

FIG 8D